# EUROPÄISCHE PATENTANMELDUNG

(11) **EP 0 798 570 A2**
(43) Veröffentlichungstag der Anmeldung: **01.10.1997**
(21) Anmeldenummer: 97100595.4
(22) Anmeldetag: 16.01.1997
(51) Int. Cl.: G01V 3/15

(54) **Verfahren und Messanordnung zur Ortung von im Erdreich befindlichen Objekten**

(30) Priorität: 25.03.1996 DE 19611757
(71) Anmelder: Vallon GmbH, D-72800 Eningen (DE)
(72) Erfinder: Vallon, Gerhard, 72800 Eningen u. A. (DE)
(74) Vertreter: Klocke, Peter, Dipl.-Ing.

(57) **Zusammenfassung**

Es wird ein Verfahren zur Ortung von in einem Suchbereich (4), insbesondere im Erdreich, befindlichen Objekten (5, 6) und eine Meßanordnung zur Durchführung des Verfahren vorgeschlagen. Unter Verwendung einer GPS-Ortungseinrichtung (8), die einen Referenzpunkt bildet, werden die Koordinaten für die Messung ermittelt. Dabei werden die von Detektoren (3) abgestrahlten Meßsignale nicht nur zur Ortung der Objekte (5, 6) verwendet, sondern auch zur Ermittlung der Relativposition zwischen Detektoren (3) und der Ortungseinrichtung (8).

## Beschreibung

Die Erfindung betrifft ein Verfahren zur Ortung von in einem Suchbereich, insbesondere im Erdreich, befindlichen Objekten gemaß Oberbegriff des Anspruchs 1 sowie eine Meßanordnung gemäß Oberbegriff des Anspruchs 5 zur Durchführung dieses Verfahrens.

Aus der DE 43 33 121 C2 ist eine Ortungseinrichtung mit einem Magnetometer bekannt, die an einer auf dem Boden liegenden Leine angebrachte Abstandsgeber verwendet. Die in gleichen Abständen angeordneten Abstandsgeber ordnen den Meßwerten ein Raster zu, so daß die Ortsbestimmung der aufgefundenen Objekte unter Zuhilfenahme des Rasters mit einer höheren Genauigkeit möglich ist.

Aus der DE 44 23 623 A1 ist ein Verfahren zur Ortung von metallischen Gegenständen in einem flächig ausgebildeten Suchbereich bekannt, welches das allgemein bekannte GPS-System verwendet. Dabei steht die Abkürzung GPS für die englische Bezeichnung "global positioning system". Das GPS-System wurde unter anderem auf der UXO-Konferenz, vom 17. bis 19. Mai 1994 in den USA vorgestellt bzw. bei verschiedenen Detektionsverfahren verwendet und in diesem Zusammenhang auch beschrieben. Die Firma GEO-Centers, Inc. stellte in diesem Zusammenhang ein Ortungssystem unter Verwendung von GPS vor, bei dem ein Fahrzeug mit mehreren Magnetometern und mit einer GPS-Antenne versehen war. Die Position der GPS-Antenne läßt sich dabei mit in Signalverbindung befindlichen Satelliten beispielsweise periodisch mit einer Frequenz von 1 Hz bestimmen.

Die DE 37 35 585 A1 offenbart ein Positionsanzeige-System, das aus einem Sender mit einem Satz von Spulen mit drei gegenseitig orthogonalen Achsen (X, Y, Z) besteht. Die Spulen werden paarweise mit Wechselstrom in einer Phasenbeziehung erregt, so daß jedes Paar ein resultierendes Feld (A, B, C) erzeugt, das sich um die Achse der anderen Spule dreht.

Eine Vorrichtung zum Orten unterhalb der Erdoberfläche befindlicher Munition ist aus der DE 42 42 541 A1 bekannt, bei der die den Erdboden sensierenden Sensoren auf einem relativ leichten, unbemannten, fernsteuerbaren Fahrzeug angeordnet werden, welches dann das mit Munition kontaminierte Gebiet abfährt. Auf diesem Fahrzeug (Tochterfahrzeug) befindet sich unter anderem die Sensoransteuerung sowie eine Sensorik zur Wegmessung. Zur genauen Lokalisierung der Objekte im Boden wird vorzugsweise das GPS und zur Bestimmung der zurückgelegten Wege ein Weggeber benutzt. Anhand entsprechender Auswerteeinrichtungen kann die Lage, wahrscheinlich Tiefe und Art des Fundes in einer entsprechenden elektronischen Karte abgelegt und auf einem Bildschirm dargestellt bzw. als Karte ausgedruckt werden.

Der Erfindung liegt die Aufgabe zugrunde, ein Verfahren zur Ortung von in einem Suchbereich befindlichen Objekten anzugeben, welches eine möglichst genaue Angabe der Positionen der gefundenen Objekte ermöglicht.

Die Lösung dieser Aufgabe erhält man durch die im Anspruch 1 angegebenen Merkmale. Zur Bestimmung der Relativposition der zum Auffinden der Objekte verwendeten Detektoren relativ zu einer ortsfesten Ortungseinrichtung wird ein von den Detektoren abgestrahltes Signal empfangen und ausgewertet oder umgekehrt. Die Ortungseinrichtung kann dabei vorzugsweise eine GPS-Antenne besitzen, so daß die Position der Ortungseinrichtung unter Verwendung des an sich bekannten GPS-Systems bestimmt werden kann. Die Relativposition zwischen Ortungseinrichtung und den Detektoren wird vorzugsweise unter Verwendung des Meßsignals der Detektoren ermittelt, wobei das Meßsignal in der Ortungseinrichtung empfangen und an eine Auswerteelektronik übertragen werden kann.

Weitere vorteilhafte Ausgestaltungen sind den Unteransprüchen zu entnehmen.

Da die GPS-Antenne an der ortsfest aufgestellten Ortungseinrichtung angebracht ist, läßt sich diese Position mittels des GPS-Systems sehr genau bestimmen. Probleme, die bei einer sich ständig in Ihrer Lage verändernden GPS-Ortungseinrichtung auftreten würden, werden dadurch vermieden.

Der Erfindung liegt weiterhin die Aufgabe zugrunde, eine Meßanordnung zu schaffen, die unter Verwendung einer an einem Referenzpunkt aufgestellten Ortungseinrichtung eine genaue Positionsbestimmung relativ zum Standort des Ortungsgerätes für in einem Suchbereich aufgefundene Objekte gewährleistet.

Die Lösung dieser Aufgabe wird durch die im Anspruch 5 aufgeführten Merkmale erhalten. Die Ortungseinrichtung besitzt zu diesem Zweck Sensoren zur Bestimmung der Relativposition der aktiven, die Detektoren bildenden Detektorspulen und steht in Signalverbindung mit einer Auswerteelektronik, die die Lage der georteten Objekte in einem Koordinatensystem anzeigt. Der Referenzpunkt ist ein beliebiger fester Ort. Die Auswerteelektronik ist selbstverständlich auch mit den Detektorspulen verbunden, so daß beim Überstreichen eines Suchobjekts ein entsprechendes Detektorsignal an die Auswerteelektronik übertragen wird, die gleichzeitig die Relativposition zwischen Detektorspulen und ortsfester Ortungseinrichtung diesem Detektorsignal zuordnet. Auf diese Weise läßt sich eine sehr genaue Positionsbestimmung für die georteten Objekte durchführen, wobei die georteten Objekte in ein Koordinatensystem eingetragen werden können. Als Sensoren sind Magnetfeldsonden, wie z. B. Feldplatten, Flux-Gate Magnetometer oder Hallsensoren geeignet.

Für die sechs Freiheitsgrade des "starren Körpers" Ortungseinrichtung werden zusätzlich zu den drei GPS-Werten drei weitere unabhängige Werte benötigt. Für den "starren Körper" Suchgerät werden ebenfalls sechs Werte benötigt, die beispielsweise durch zwei Pulsspulen im Suchgerät mit drei Werten in den Empfangsspulen der Ortungseinrichtung, sechs Pulsspulen im Suchgerät mit einem Wert in eine Empfangsspule der Ortungseinrichtung oder drei Hallsensoren im Suchgerät und einer zusätzlichen Pulsspule im Suchgerät mit drei Werten in den Empfangsspulen realisiert werden kann. So könnten auch im Suchgerät, beispielsweise im Gestänge, Hallsensoren als elektronischer Kompaß untergebracht sein.

In dem Sonderfall von starrer mechanischer Verbindung zwischen Suchgerät und Ortungseinrichtung ist die Ortsbestimmung der Sensoren relativ zum Ortungsgerät unnötig, da die Relativposition durch die Mechanik dann fest vorgegeben ist.

Als Sensoren können in der Ortungseinrichtung drei rechtwinklig zueinander ausgerichtete Empfangsspulen vorgesehen sein. Die Orientierung der Empfangsspulen im Raum kann dabei mittels dreier Hallsensoren durchgeführt werden. In Verbindung mit dem GPS-Ortungssystem können die Objektkoordinaten in verschiedenen Koordinatensystemen zur Angabe des Ortes eines Punktes auf der Erde z. B. in UTM, Gauß-Krüger oder GPS-Koordinaten angezeigt werden. Das Ortungsgerät kann auch relativ zur Erdoberfläche möglichst gleichförmig bewegt werden, beispielsweise am Fahrzeug montiert oder im Rucksack. Gegebenenfalls müssen dann Ort und Orientierung des Ortungsgeräts bezüglich der Erde, d. h. bezüglich eines globalen Erd-Koordinatensystems laufend bestimmt werden, z. B. durch GPS für den Ursprung und Hall- und Trägheitssensoren für die Orientierung. Die Vorteile dieses Ortungsgerätes gegenüber der Direktvermessung der Detektoren, bei der das Ortungsgerät am Suchgerät montiert ist, liegt in diesem Fall darin, daß die GPS-Antenne von den Detektoren getrennt ist, was Gewicht und Störungen beeinflußt. Die Bewegung der GPS-Antenne ist gleichmäßiger und langsamer als an den eventuell unregelmäßig geschwenkten Detektoren.

Durch die Verbindung der Hallsensoren mit Trägheitssensoren für das Gravitationsfeld der Erde, wird das Festlegen der 3 Basisvektoren eines lokalen Koordinatensystems ermöglicht.

Gemäß einer weiteren Ausbildung erzeugt für die Ortsbestimmung die Ortungseinrichtung Magnetfelder, die von Magnetsensoren (Sonden oder Empfangsspulen) zusätzlich zu den Objektfeldern empfangen werden.

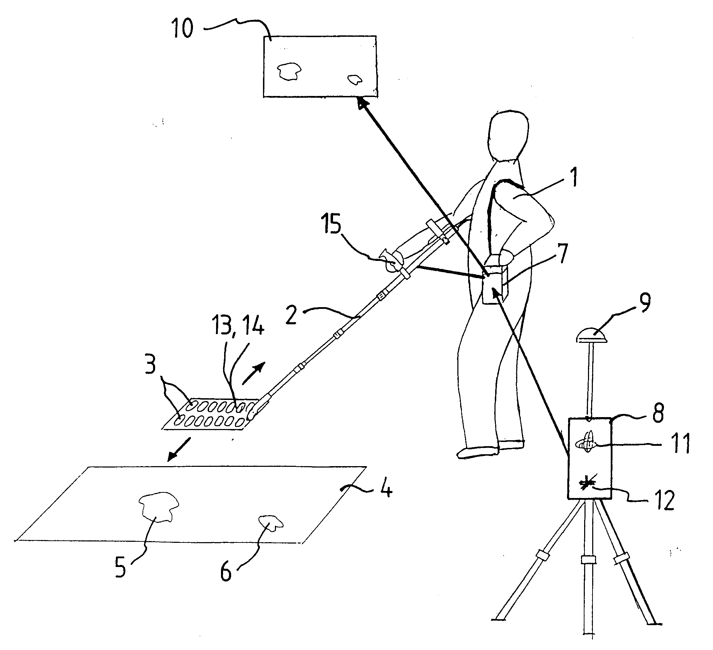

Die Erfindung wird nachfolgend anhand der Zeichnung näher erläutert.

In der Zeichnung ist ein Sondenführer 1 mit einem Suchgerät 2 dargestellt, das mit mehreren (verschiedenen) Detektoren 3 ausgerüstet ist. Dieses kann verschiedene Arten von Detektoren als Mittel zum Detektieren von Objekten und eventuell zusätzlich Sensoren zur Bestimmung von Ortskoordinaten enthalten. Der Sondenführer 1 schreitet einen hier nur angedeuteten Suchbereich 4 ab, in dem Objekte 5, 6 einliegen. Bei den Objekten 5, 6 kann es sich beispielsweise um Metallteile oder Plastikteile handeln.

Die Detektoren 3, die z. B. von Detektorspulen gebildet werden, sind elektrisch mit einer Auswerteelektronik 7 verbunden, die auch mit einer an einem Referenzpunkt aufgestellten Ortungseinrichtung 8 in Signalverbindung steht. Die Ortungseinrichtung 8 kann, insbesondere in Verbindung mit passiven Detektoren, aktiv ausgebildet sein. Durch Ströme in den drei Spulen in der Ortungseinrichtung können abwechselnd positive und negative "Doppelpulse" ein Ortungsmagnetfeld erzeugen, das z. B. von bekannten Sonden des Anmelders für Magnetfelder (Flux Gates) zusätzlich empfangen und zur Positionsbestimmung relativ zur Ortungseinrichtung dieser Sonden verwendet wird. Bei Codierung der Ströme können die Felder den Spulen zugeordnet werden wie es in der anhängigen deutschen Patentanmeldung 195 10 506.0 mit dem Titel "Verfahren und Meßeinrichtung zur Metalldetektion mittels einer Spulenanordnung" beschrieben ist. Die kurzen Doppelpulse stören die Objektsuche nicht, da sie keinen Gleichfeldanteil besitzen. Den eigentlichen Referenzpunkt bildet eine GPS-Antenne 9, die mit hier nicht dargestellten Satelliten eines GPS-Ortungssystems in Funkverbindung steht. Die Auswerteelektronik 7 überträgt die Meßdaten und auch die zur Positionsbestimmung der Objekte 5, 6 erforderlichen Informationen zu einer Anzeigeeinrichtung 10, die Teil eines Computersystems sein kann. Die Anzeigeeinrichtung 10 ermöglicht eine koordinatengenaue Darstellung der georteten Objekte 5, 6.

Zur Festlegung der Koordinaten in Bezug auf die Ortungseinrichtung 8, sind in dieser in 3 senkrecht aufeinanderstehenden Ebenen Empfangsspulen 11 angeordnet, mit denen die gepulsten Meßsignale der Detektoren 3 empfangen werden. Die Ausrichtung der Empfangsspulen 11 wird mittels dreier Hallsensoren 12 ermittelt, die ebenfalls in der Ortungseinrichtung 8 angeordnet sind. Die Empfangsspulen 11 ermöglichen somit in Verbindung mit den Hallsensoren 12 die Bestimmung der Relativposition der Detektoren 3 zu jedem Zeitpunkt, und zwar bezüglich des durch die GPS-Antenne 9 gebildeten Referenzpunktes. Die Position des Referenzpunktes wird wiederum von dem GPS-System in an sich bekannter Weise bestimmt, so daß insgesamt der gesamte Suchbereich 4 einem exakten Koordinatensystem zugeordnet werden kann. Die Positionsangaben der georteten Objekte lassen sich somit abspeichern oder direkt in einem Koordinatensystem lagegenau anzeigen.

An dem Suchgerät 2 können im Bereich der Detektoren 3 zusätzlich Trägheitssensoren 13 und/oder zusätzliche Hallsensoren 14 angebracht sein. Die Anbringung dieser Sensoren könnte auch am Haltegriff 15 vorgenommen werden.

## Patentansprüche

1. Verfahren zur Ortung von in einem Suchbereich, insbesondere im Erdreich, befindlichen Objekten mittels den Suchbereich überstreichender Detektoren, wobei die zu den festgestellten Objekten gehörende örtliche Lage unter Verwendung einer an einem Referenzpunkt aufgestellten Ortungseinrichtung ermittelt und in einem Koordinatensystem dargestellt oder in anderer Weise angezeigt wird, **dadurch gekennzeichnet,** daß die Ortungseinrichtung (8) zur Bestimmung der Relativposition der Detektoren (3) relativ zur Ortungseinrichtung (8) ein von den Detektoren (3) abgestrahltes Signal empfängt oder mit einem oder mehreren Sendern Signale sendet, die von dafür geeigneten an den Detektoren montierten Sensoren empfangen werden.

2. Verfahren nach Anspruch 1, **dadurch gekennzeichnet,** daß als Signal zur Bestimmung der Relativposition das zur Ortung der Objekte (5, 6) abgestrahlte Meßsignal der Detektoren (3) verwendet wird.

3. Verfahren nach Anspruch 1, **dadurch gekennzeichnet,** daß als Signal zur Bestimmung der Relativposition ein vom Ortungsgerät zusätzlich zu den Objektsignalen abgestrahltes, vorzugsweise codiertes Signal empfangen wird.

4. Verfahren nach einem der vorangegangenen Ansprüche, **dadurch gekennzeichnet,** daß die Ortungseinrichtung (8) einen Referenzpunkt in einem GPS-Ortungssystem bildet.

5. Meßanordnung zur Ortung von in einem Suchbereich, insbesondere im Erdreich, befindlichen Objekten mittels den Suchbereich überstreichender Detektoren, wobei die zu den festgestellten Objekten gehörende örtliche Lage unter Verwendung einer an einem Referenzpunkt aufgestellten Ortungseinrichtung ermittelt und in einem Koordinatensystem dargestellt oder in anderer Weise angezeigt wird, **dadurch gekennzeichnet,** daß die Ortungseinrichtung (8) Sensoren (11, 12) zur Bestimmung der Relativposition der aktiven, die Detektoren (3) bildenden Detektorspulen hat, und daß eine mit der Ortungseinrichtung (8) in signalverbindungstehende Auswerteelektronik (7) die Lage der georteten Objekte (5, 6) in dem Koordinatensystem anzeigt.

6. Meßanordnung nach Anspruch 5, **dadurch gekennzeichnet,** daß als Sensoren drei unterschiedlich ausgerichtete Empfangsspulen (11) vorgesehen sind.

7. Meßanordnung nach Anspruch 5, **dadurch gekennzeichnet,** daß die Ortungseinrichtung (8) Magnetfelder erzeugt, die von Magnetsensoren im Bereich der Detektoren (3) zusätzlich zu den Objektfeldern empfangen werden.

8. Meßanordnung nach Anspruch 6, **dadurch gekennzeichnet,** daß zur Bestimmung der Orientierung der Empfangsspulen (11) im Raum in der Ortungseinrichtung (8) drei Hallsensoren (12) und Trägheitssensoren angeordnet und mit der Auswerteelektronik (7) verbunden sind.

9. Meßanordnung nach einem der Ansprüche 6 bis 8, **dadurch gekennzeichnet,** daß für die Messung des Gravitationsfeldes der Erde Trägheitssensoren vorgesehen sind.

10. Meßanordnung nach einem der Ansprüche 5 bis 9, **dadurch gekennzeichnet,** daß die Ortungseinrichtung (8) Teil eines GPS-Ortungssystems ist und einen Referenzpunkt mit einer GPS-Antenne (9) bildet.
